(19) **Europäisches Patentamt**
**European Patent Office**
**Office européen des brevets**

(11) Publication number : **0 335 687 B1**

(12) # EUROPEAN PATENT SPECIFICATION

(45) Date of publication of patent specification :
09.09.92 Bulletin 92/37

(51) Int. Cl.⁵ : **F16D 25/063,** F16D 13/58

(21) Application number : 89303103.9

(22) Date of filing : 29.03.89

(54) Hydraulic clutch construction.

(30) Priority : 29.03.88 JP 75658/88

(43) Date of publication of application :
04.10.89 Bulletin 89/40

(45) Publication of the grant of the patent :
09.09.92 Bulletin 92/37

(84) Designated Contracting States :
DE FR GB IT

(56) References cited :
DE-A- 1 455 884
DE-A- 3 024 196
DE-A- 3 321 822
FR-A- 829 074
GB-A- 2 142 403
US-A- 2 806 568
US-A- 3 013 792

(73) Proprietor : HONDA GIKEN KOGYO
KABUSHIKI KAISHA
1-1, 2-chome Minami-Aoyama
Minato-ku Tokyo (JP)
Proprietor : KABUSHIKI KAISHA F.C.C.
880, Sato-cho
Hamamatsu-shi Sizuoka (JP)

(72) Inventor : Nakayama, Hiroshi c/o Kabushiki
Kaisha Honda
Gijutsu Kenkyusho 4-1, Chuo 1-chome
Wako-shi Saitama (JP)
Inventor : Ozawa, Shigeo c/o Kabushiki Kaisha
Honda
Gijutsu Kenkyusho 4-1, Chuo 1-chome
Wako-shi Saitama (JP)
Inventor : Suzuki, Yasuyuki c/o Kabushiki
Kaisha F.C.C.
880, Sato-cho
Hamamatsu-shi Sizuoka (JP)

(74) Representative : Tomlinson, Kerry John et al
Frank B. Dehn & Co. European Patent
Attorneys Imperial House 15-19 Kingsway
London WC2B 6UZ (GB)

## Description

The present invention relates to a hydraulic cluth construction according to the preamble of Claim 1. Hydraulically operated clutch constructions of that kind are for use in automatic transmissions or the like.

Hydraulic clutches have been used in automotive automatic transmissions. Such a hydraulic clutch comprises a clutch drum having a hydraulic pressure chamber, a piston movably fitted in the clutch drum in covering relation to the hydraulic pressure chamber, and a pressure plate, a drive plate, and a driven plate which are successively disposed in confronting relation to a surface of the piston remote from its surface facing the hydraulic pressure chamber. When the hydraulic pressure chamber is supplied with a hydraulic pressure, the piston is moved to push the pressure plate to press the drive and driven plates into engagement with each other.

In view of recent demands for smaller and lighter automatic transmissions and hence for smaller and lighter hydraulic clutches, its has been attempted to increase the hydraulic pressure supplied to the hydraulic pressure chamber to exert a larger force to push the piston. This attempt is however problematic in that the power loss of a pump for supplying the hydraulic pressure is increased and the cost becomes higher since the sealing ability and the pressure resistance have to be increased.

Another proposed hydraulic clutch includes a diaphragm spring disposed between the piston and the pressure plate, the diaphragm spring having a radially inner end pressable by the piston and a radially outer end held against the clutch drum. The pressure plate has a projection held in abutment against the diaphragm spring between the radially inner and outer ends thereof. The diaphragm spring is thus caused to act as a lever with the radially outer end serving as its fulcrum. The force applied by the piston is boosted by the lever through the projections and transmitted to the pressure plate. A hydraulic clutch of this construction is disclosed in Japanese Laid-Open Patent Publication JP-A-56-164228, for example. The piston has a boost release projection corresponding to the projection on the pressure plate. When the piston is moved a distance greater than a predetermined stroke, the boost release projections are brought into engagement with the diaphragm spring to release the diaphragm spring from the boosting action, thereby preventing a high load from being applied to the diaphragm spring.

Since the diaphragm spring which serves as a lever is subject to a high load and a high stress, it can be used only in a limited pressure range in view of the available mechanical strength and durability of the diaphragm spring. Particularly where the hydraulic clutch is small in size and the diaphragm spring is small in diameter, with a resultant higher hydraulic pressure for a desired clutch capability, sufficient mechanical strength and durability cannot be given to the diaphragm spring. For transmitting the force of the piston via the diaphragm spring to the pressure plate, the stroke of the piston must allow for the flexing of the diaphragm spring. Inasmuch as the piston stroke is increased, an extra axial space is needed in the clutch to accommodate the piston stroke.

With the piston having the boost release projection, the load on the diaphragm spring is prevented from being excessively high. However, the boosting ability of the diaphragm spring is available only until the boost release project-ion engages the diaphragm spring. Consequently, the maximum capacity of the hydraulic clutch remains the same as it would be if there were no diaphragm spring in the clutch.

US-A-2806 568 forming the preamble of Claim 1 discloses a hydraulique clutch having a lever to apply a boosted force from the piston to the pressure plate, and having a return spring for urging the piston back into the hydraulic pressure chamber. However, additional components are required to hold the lever in engagement with the piston.

## SUMMARY OF THE INVENTION

It is an object of the present invention to provide a hydraulic clutch construction which can apply a boosted force from a piston to a pressure plate without employing any diaphragm spring which would suffer durability and mechanical strength problems.

According to the present invention there is provided a hydraulic clutch construction comprising: a clutch drum having a hydraulic pressure chamber defined therein;

a piston movably fitted in said clutch drum in covering relation to said hydraulic pressure chamber;

a pressure plate disposed in confronting relation to a surface of said piston remotely from said hydraulic pressure chamber, and having a projection;

interleaved drive and driven plates disposed in confronting relation to a surface of said pressure plate remotely from said piston, and engageable with each other by said pressure plate pressed by said piston moved in response to a hydraulic pressure supplied to said hydraulic pressure chamber;

a return spring for urging said piston back into said hydraulic pressure chamber; and

an assisting member disposed between said piston and said

pressure plate and comprising an annular array of rigid assisting levers and a retaining plate holding said assisting levers together, said assisting member having a radially inner end pressableby said piston, a radially outer end held in engagement with said clutch drum, and a radially intermediate region engageable with said projection of said pressure plate, the arrangement being such that each said assisting lever serves as a lever with said radially outer end as a fulcrum for boosting the force applied from said piston and transmitting the boosted force to said pressure plate,

each assisting lever being in force-transmitting engagement with said clutch drum at its radially outer end and being in force transmitting engagement with said piston at its radially inner end and said retaining plate being in the form of a conical ring of such inner and outer diameters that it extends to only intermediate portions of the levers andis connected to the levers in said intermediate portions,

said retaining plate being made of a resilient material so as to serve as a Belleville spring for urging said piston into said hydraulic pressure chamber.

The levers preferably engage directly the projection of the pressure plate. These features lead to a strong and effective assisting member incorporating the levers in a unit which is convenient to handle for assembly. The maximum clutch engagement force is increased by the invention, and there is no stroke loss caused by flexing of the assisting member. Thus the retaining plate has a dual function, allowing the elimination of other components for returning the piston into the pressure chamber.

## BRIEF DESCRIPTION OF THE DRAWINGS

The present invention will become more fully understood from the detailed description of an example given hereinbelow and the accompanying drawings which are given by way of illustration only, and thus are not limitative of the present invention and wherein:

Fig. 1 is a fragmentary cross-sectional view of an automatic transmission incorporating a hydraulic clutch according to the present invention;

Fig. 2 is an enlarged cross-sectional view of the hydraulic clutch of the present invention;

Fig. 3A is a front elevational view of an assisting member used in the hydraulic clutch;

Fig. 3B is a cross-sectional view of the assisting member taken along line III - III of Fig. 3A;

Fig. 4A is a front elevational view of a retaining plate of the assisting member; and

Fig. 4B is a cross-sectional view of the retaining plate taken along line IV - IV of Fig. 4A.

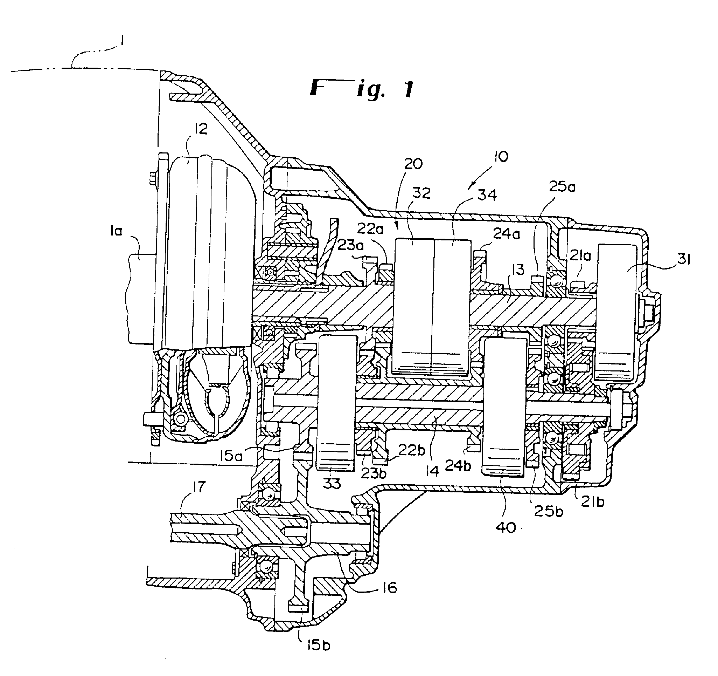

Fig.1 shows an automotive automatic transmission having hydraulic clutches according to the present invention. The transmission, generally designated by the reference numeral 10, is positioned at the output end of an output shaft 1a of an engine 1 to which a torque converter 12 is coupled. The torque converter 12 has an output shaft connected to an input shaft 13 of the transmission 10 for transmitting output power from the engine 1 through the torque converter 12 to the transmission input shaft 13.

The transmission 10 includes a countershaft 14 extending parallel to the input shaft 13, and a transmission mechanism 20 disposed between the input shaft 13 and the countershaft 14. The transmission mechanism 20 has a drive assembly disposed on the countershaft 13 and a driven assembly disposed on the countershaft 14, and includes intermeshing gears 21a, 21b for a first-speed gear position, intermeshing gears 22a, 22b for a second-speed gear position, intermeshing gears 23a, 23b for a third-speed gear position, intermeshing gears 24a, 24b for a fourth-speed gear position, and intermeshing gears 25a, 25b for a reverse gear position. The reverse gears 25a, 25b mesh with each other through a reverse idler gear (not shown) for reversing the direction of rotation. The first-speed drive gear 21 a, the second-speed drive gear 22a, the third-speed driven gear 23b, the fourth-speed drive gear 24a, and the reverse driven gear 25b may be rotatably mounted on the input shaft 13 or the countershaft 14, as the case may be, and the other gears may be fixedly mounted on the input shaft 13 or countershaft 14.

The gears rotatably mounted on the shaft are associated respectively with hydraulic clutches 31, 32, 33, 34, and 40. By selectively engaging these five hydraulic clutches, one of the rotatably mounted gears is coupled to the shaft on which it is mounted to transmit engine output power through the gear and the gear meshing therewith.

With the hydraulic clutches 31 through 34 selectively engaged, the engine output power is changed in speed by the gear train associated with the engaged hydraulic clutch and then transmitted to the countershaft 14. An output drive gear 15a fixed to the countershaft 14 is held in mesh with an output driven gear 15b fixed to an output shaft 16 of the transmission 10. Therefore, the engine output power transmitted to the countershaft 14 is transmitted through the gears 15a, 15b to the output shaft 16, from which it is transmitted through a drive shaft 17 to a differential (not shown).

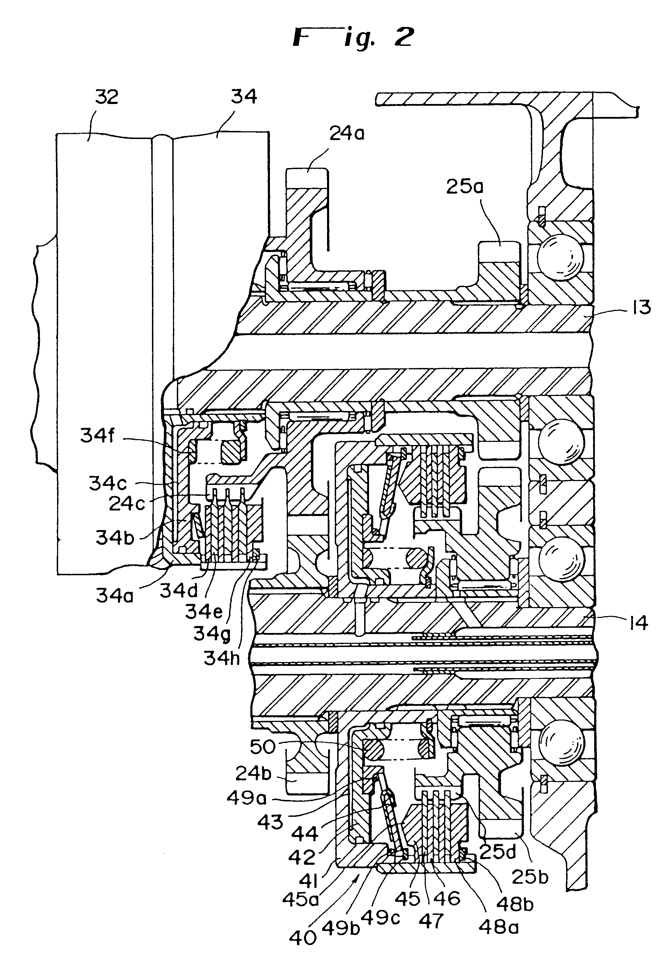

The hydraulic clutch 40 associated with the reverse gears is of a construction according to the present invention. The hydraulic clutch 40 and the hydraulic clutch 34 associated with the fourth-speed gears will be described with reference to Fig. 2.

In Fig. 2, the hydraulic clutch 34 mounted on the input shaft 13 in back-to-back relation to the hydraulic clutch 32 associated with the second-speed gears is fragmentarily shown in cross-section, and the hydraulic clutch 40 mounted on the countershaft 14 is fragmentarily shown in cross-section.

The hydraulic clutch 34 which is of a conventional structure will first be described briefly below. The hydraulic clutch 34 has a clutch drum 34a joined back-to-back to the clutch drum of the hydraulic clutch 32 and fixedly mounted on the input shaft 13, and a piston 34b axially movably fitted in the clutch drum 34a in covering relation to a hydraulic pressure chamber 34c defined in the clutch drum 34a. The piston 34b is normally urged at its radially inner end to move into the hydraulic pressure chamber 34c (i.e., to the left) under the bias of a return spring 34f. When the hydraulic pressure in the hydraulic pressure chamber 34c is low, the piston 34b is moved to the left as shown under the resiliency of the return spring 34f.

The piston 34b has a radially outer end confronting a plurality of interleaved clutch plates 34d and clutch discs 34e. The clutch plates 34d engage the clutch drum 34a, whereas the clutch discs 34e engage clutch splines 24c integral with the fourth-speed drive gear 24a. The clutch plates 34d and the clutch discs 34e are retained in the clutch drum 34a by an end plate 34g and a snap ring 34h.

When a certain hydraulic pressure is supplied into the hydraulic pressure chamber 34c to move the piston 34b to the right against the bias of the return spring 34f, the piston 34b presses the clutch plates 34d and the clutch discs 34g against the end plate 34g. The clutch plates 34d and the clutch discs 34g are now held in engagement with each other by frictional forces produced therebetween. The fourth-speed drive gear 24a is now rotated with the input shaft 13 to transmit the engine output power through the fourth-speed gears 24a, 24b. At this time, the clutch plates 34d serve as drive plates, and the clutch discs 34e as driven plates.

The hydraulic clutch 40 of the invention will now be described below. The hydraulic clutch 40 has a clutch drum 41 fixedly mounted on the countershaft 14 and a piston 41 axially movably fitted on the clutch drum 41 in covering relation to a hydraulic pressure chamber 43 defined in the clutch drum 41. The piston 42 is normally urged at its radially inner end to move into the hydraulic pressure chamber 43 (i.e., to the left) under the bias of a return spring 50. When the hydraulic pressure in the hydraulic pressure chamber 43 is low, the piston 42 is moved to the left as shown under the resiliency of the return spring 50.

The hydraulic clutch 40 has a plurality of interleaved clutch plates 46 and clutch discs 47 which are retained in the clutch drum 41 by an end plate 48a and a snap ring 48b. The clutch plates 46 engage the clutch drum 41, while the clutch discs 47 engage clutch splines 25d integral with the reverse driven gear 25b. A pressure plate 45 is disposed on a piston side of the leftmost clutch disc 47 which is closest to the piston 42, with a slightly conical disc-shaped assisting member 44 interposed between the pressure plate 45 and the piston 42.

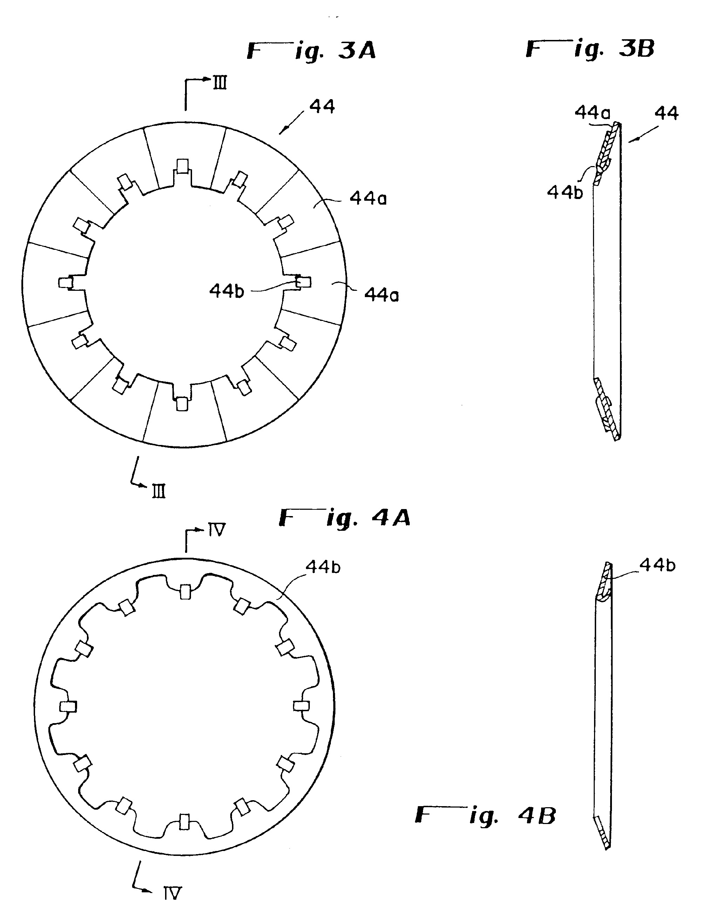

The assisting member 44 is illustrated in detail in Figs. 3A and 3B. As shown in Figs. 3A and 3B, the assisting member 44 comprises a slightly conical, annular array of assisting levers 44a (twelve in the illustrated embodiment) which are held together by a retaining plate 44b shown in Figs. 4A and 4B.

With the assisting member 44 assembled in the hydraulic clutch 40, the radially inner ends of the assisting levers 44a abut against the piston 42 through a support ring 49a, and the radially outer ends of the assisting levers 44a are sandwiched between a support ring 49b and a snap ring 49c.

The pressure plate 45 has a projection 45a projecting axially toward the assisting member 44 and engageable with the assisting member 44 at a position radially intermediate between its radially inner and outer ends.

It may be seen that each assisting lever is in force-transmitting engagement with the clutch drum at its radially outer end and is in force-transmitting engagement with the piston at its radially inner end and the retaining plate is in the form of a conical ring of such inner and outer diameters that it extends to only intermediate portions of the levers and is connected to the levers in the intermediate portions. The levers engage directly the projection 45a of the pressure plate.

When the hydraulic pressure chamber 43 is supplied with a certain hydraulic pressure, the piston 42 is moved to the right against the bias of the return spring 50 to cause the support ring 49a to push the radially inner end of each assisting lever 44a to the right. The assisting lever 44a is now turned about its radially outer end until its radially intermediate region engages the projection 45a of the pressure plate 45 to push the pressure plate 45 to the right. The assisting lever 44a thus serves as a lever with the radially outer end as the fulcrum, the radially inner end receiving the applied moment, and the intermediate region applying the force to the projection 45a. The force from the piston 42 is thus boosted by the lever action of the assisting lever 44a and transmitted to the pressure plate 45.

When the pressure plate 45 is pushed to the right by the boosted force, the clutch plates 46 and the clutch discs 47 are sandwiched between the pressure plate 45 and the end plate 48a. The clutch plates 46 and the clutch discs 47 are thus held in engagement with each other under frictional forces produced therebetween. The reverse driven gear 45b is now coupled to the countershaft 14 for co-rotation, so that the engine output power can be transmitted through the reverse gears 25a, 25b and hence the transmission 10 is in the reverse gear position. At this time, the clutch discs 47 serve as drive plates, whereas the clutch plates 46 as driven plates.

The force from the pressure plate 45 is larger than the force from the piston 42 by an amount commensurate with the lever ratio of the assisting member 44. The torque transmitting capability of the reverse hydraulic clutch 40 is thus increased without increasing the hydraulic pressure in the hydraulic pressure chamber 43. A large torque transmitting requirement of the hydraulic clutch 40 can therefore be met without increasing the size of the hydraulic clutch 40. The assisting lever 44a is made of a rigid material and does not flex to an appreciable extent, so that the stroke of the piston 42 is not increased.

The retaining plate 44b of the assisting member 44 serves to hold the assisting levers 44a together. The retaining plate 44b is made of a resilient material so as to serve as a Belleville spring for urging the piston 42 into the hydraulic pressure chamber 43. The retaining plate 44b thus constructed is used to assist the spring force of the return spring 50.

With the arrangement of the present invention, the radially inner end of the assisting member is pushed by the piston and the radially outer end of the assisting member is borne by the clutch drum, with the intermediate region of the assisting member being disposed for pressing the pressure plate. The assisting member thus serves as a lever with the radially outer end as the fulcrum, the radially inner end receiving the applied force, and the intermediate region applying the boosted force to the pressure plate. The force applied from the piston is thus boosted by the assisting member and then transmitted to the pressure plate. The torque transmitting capability of the reverse hydraulic clutch is thus increased without increasing the hydraulic pressure in the hydraulic pressure chamber to exert a force to the piston. That is, the size of the hydraulic clutch can be reduced without lowering the capacity of the hydraulic clutch. Since the assisting member comprises a rigid member, it does not appreciably flex as compared with the conventional diaphragm spring used as a lever, so the piston has a minimum stroke loss. Consequently, the axial dimension of the hydraulic clutch required to accommodate the piston stroke is reduced, making the hydraulic clutch compact.

**Claims**

1. A hydraulic clutch construction (40) comprising:
   a clutch drum (41) having a hydraulic pressure chamber defined therein;
   a piston (42) movably fitted in said clutch drum (41) in covering relation to said hydraulic pressure chamber (43);
   a pressure plate (45) disposed in confronting relation to a surface of said piston (42) remotely from said hydraulic pressure chamber (43), and having a projection (45a);
   interleaved drive and driven plates (46, 47) disposed in confronting relation to a surface of said pressure plate (45) remotely from said piston (42), and engageable with each other by said pressure plate (45) pressed by said piston (42) moved in response to a hydraulic pressure supplied to said hydraulic pressure chamber (43);
   a return spring (50) for urging said piston (42) back into said hydraulic pressure chamber (43), and
   an assisting member (44) disposed between said piston (42) and said pressure plate (45) and comprising an annular array of rigid assisting levers (44a) and a retaining plate (44b) holding said assisting levers together, said assisting member (44) having a radially inner end pressable by said piston (42), a radially outer end held in engagement with said clutch drum (41), and a radially intermediate region engageable with said projection (45a) of said pressure plate (45), the arrangement being such that each said assisting lever (44a) serves as a lever with said radially outer end as a fulcrum for boosting the force applied from said piston (42) and transmitting the boosted force to said pressure plate (45),
   each assisting lever (44a) being in force-transmitting engagement with said clutch drum (41) at its radially outer end and being in force transmitting engagement with said piston (42) at its radially inner end; characterized in that said retaining plate (44b) is in the form of a conical ring of such inner and outer diameters that it extends to only intermediate portions of the levers (44a) and is connected to the levers in said intermediate portions,
   and said retaining plate (44b) is made of a resilient material so as to serve as a Belleville spring for urging said piston (42) into said hydraulic pressure chamber (43).

2. A hydraulic clutch construction (40) as defined in claim 1 wherein said levers (44a) engage directly said projection (45b) of said pressure plate (45).

3. A hydraulic clutch construction (40) as defined in claim 1 or 2 wherein the radially outer end of said assisting member (44) is sandwiched between a support ring (49b) and a snap ring (49c) to keep the radially outer end in engagement with said clutch drum (41).

**Patentansprüche**

1. Hydraulikkupplungsanordnung (40) umfassend:
   eine Kupplungstrommel (41) mit einer darin ausgebildeten Hydraulikdruckkammer;
   einen Kolben (42), der in die Kupplungstrommel (41) die Hydraulikdruckkammer (43) abdeckend beweglich eingepaßt ist;
   eine Druckplatte (45), die einer von der Hydraulikdruckkammer (43) entfernten Fläche des Kolbens (42) gegenüberliegend angeordnet ist und einen Vorsprung (45a) aufweist;

ineinandergreifende, antreibende und angetriebene Platten (46,47), die von dem Kolben (42) entfernt einer Fläche der Druckplatte (45) gegenüberliegend angeordnet sind und miteinander durch die durch den Kolben (42) gedrückte Druckplatte (45) in Eingriff bringbar sind, wobei der Kolben (42) in Antwort auf der Hydraulikdruckkammer (43) zugeführten Hydraulikdruck bewegt ist;

eine Rückholfeder (50), um den Kolben (42) zurück in die Hydraulikdruckkammer (43) zu drängen und

ein Hilfsglied (44), welches zwischen dem Kolben (42) und der Druckplatte (45) angeordnet ist und eine ringförmige Reihe von starren Hilfshebeln (44a) und eine die Hilfshebel zusammenhaltende Rückhalteplatte (44b) umfaßt, wobei ein radial inneres Ende des Hilfselements (44) durch den Kolben (42) drückbar ist, ein radial äußeres Ende in Eingriff mit der Kupplungstrommel (41) gehalten ist und ein radial dazwischen liegender Bereich mit dem Vorsprung (45a) der Druckplatte (45) in Eingriff bringbar ist, wobei die Anordnung derart ist, daß jeder der Hilfshebel (44a) als ein Hebel zum Verstärken der von dem Kolben (42) angelegten Kraft und zum Übertragen der verstärkten Kraft auf die Druckplatte (45) dient, wobei das radial äußere Ende als Hebeldrehpunkt wirkt,

wobei jeder Hilfshebel (44a) an seinem radial äußeren Ende in kraftübertragendem Eingriff mit der Kupplungstrommel (41) ist und an seinem radial inneren Ende in kraftübertragendem Eingriff mit dem Kolben (42) ist; **dadurch gekennzeichnet,** daß die Rückhalteplatte (44b) die Form eines konischen Rings aufweist mit derartigen Innen- und Außendurchmessern, daß sie sich lediglich zu Zwischenabschnitten der Hebel (44a) erstreckt und an diesen Zwischenabschnitten mit den Hebeln verbunden ist,

und daß die Rückhalteplatte (44b) aus einem elastischen Material gefertigt ist, um als Belleville-Feder zu dienen, um den Kolben (42) in die Hydraulikdruckkammer (43) zu drängen.

2. Hydraulische Kupplungsvorrichtung (40) nach Anspruch 1, bei welcher die Hebel (44a) direkt mit dem Vorsprung (45b) der Druckplatte (45) in Eingriff sind.

3. Hydraulische Kupplungsvorrichtung (40) nach Anspruch 1 oder 2, bei welcher das radial äußere Ende des Hilfselements (44) zwischen einem Haltering (49b) und einem Sprengring (49c) zwischengelegt ist, um das radial äußere Ende in Eingriff mit der Kupplungstrommel (41) zu halten.

**Revendications**

1. Construction d'embrayage hydraulique (40) comprenant :

un tambour (41) d'embrayage ayant une chambre de pression hydraulique délimitée à l'intérieur,

un piston (42) monté dans le tambour d'embrayage (41) afin qu'il soit mobile et qu'il recouvre la chambre de pression hydraulique (43),

un plateau de pression (45) disposé en face d'une surface du piston (42) du côté opposé à la chambre de pression hydraulique (43) et ayant une saillie (45a),

des plateaux menants et menés (46, 47) qui sont imbriqués et sont en face d'une surface du plateau de pression (45) qui est opposée au piston (42) et qui sont destinés à être mis mutuellement en contact par le plateau de pression (45) lorsque celui-ci est repoussé par le piston (42) déplacé sous l'effet d'un fluide hydraulique sous pression transmis à la chambre de pression hydraulique (43),

un ressort de rappel (50) destiné à rappeler le piston (42) dans la chambre de pression hydraulique (43), et

un organe d'assistance (44) disposé entre le piston (42) et le plateau de pression (45) et comprenant un ensemble annulaire de leviers rigides d'assistance (44a) et une plaque de retenue (44b) qui maintient ensemble les leviers d'assistance, l'organe d'assistance (44) ayant une extrémité radialement interne qui peut être repoussée par le piston (42), une extrémité radialement externe maintenue au contact du tambour d'embrayage (41), et une région radialement intermédiaire destinée à venir au contact de la saillie (45a) du plateau de pression (45), la disposition étant telle que chaque levier d'asssatance (44a) est utilisé comme un levier ayant l'extrémité radialement externe comme pivot pour la multiplication de la force appliquée par le piston (42) et la transmission de la force multipliée au plateau de pression (45),

chaque levier d'assistance (44a) coopérant pour la transmission des forces avec le tambour d'embrayage (41) à son extrémité radialement externe et coopérant pour la transmissaion des forces avec le piston (42) à son extrémité radialement interne, caractérisée en ce que la plaque de retenue (44b) est sous forme d'une bague conique ayant des diamètres interne et externe tels qu'elle s'étend seulement jusqu'à des parties intermédiaires des leviers (44a) et est raccordée aux leviers dans ces parties intermédiaires, et en ce que

la plaque de retenue (44b) est formée d'un matériau élastique afin qu'elle joue le rôle d'une rondelle Belleville pour le rappel du piston (42) vers la chambre de pression hydraulique (43).

2. Construction d'embrayage hydraulique (40) selon la revendication 1, dans laquelle les leviers (44a) sont directement au contact de la saillie (45a) du plateau de pression (45).

3. Construction d'embrayage hydraulique (40) selon la revendication 1 ou 2, dans laquelle l'extrémité radialement externe de l'organe d'assistance (44) est prise en sandwich entre une bague de support (49b) et une bague élastique (49c) afin que l'extrémité radialement externe soit maintenue au contact du tambour d'embrayage (41).

Fig. 1

# Fig. 2

Fig. 3A

Fig. 3B

44
44a
44b
44a

44a
44
44b

Fig. 4A

44b

Fig. 4B

44b